# EUROPÄISCHE PATENTSCHRIFT

(11) **EP 1 133 648 B1**
(45) Veröffentlichungstag und Bekanntmachung des Hinweises auf die Patenterteilung: **02.04.2003**
(21) Anmeldenummer: 99962102.2
(22) Anmeldetag: 23.11.1999
(51) Int. Cl.: F16F 9/44

(54) **BODENVENTIL FÜR ZWEIROHRSTOSSDÄMPFER FÜR KRAFTFAHRZEUGE**
BOTTOM VALVE FOR TWIN-TUBE SHOCK ABSORBERS FOR MOTOR VEHICLES
CLAPET DE FOND DESTINEE A UN AMORTISSEUR DE CHOCS A DEUX TUYAUX D'UN VEHICULE AUTOMOBILE

(30) Priorität: 23.11.1998 DE 19853854
(43) Veröffentlichungstag der Anmeldung: 19.09.2001
(73) Patentinhaber: Wohlfarth, Klaus, 71540 Murrhardt (DE)
(72) Erfinder: Wohlfarth, Klaus, 71540 Murrhardt (DE)
(74) Vertreter: Zipse + Habersack
(86) Internationale Anmeldenummer: DE9903787
(87) Internationale Veröffentlichungsnummer: WO00031435

(56) Entgegenhaltungen:
- EP-A- 0 561 404
- DE-A- 19 722 216
- DE-C- 19 724 328
- US-A- 4 880 086

## Beschreibung

Die Erfindung betrifft ein Bodenventil für Zweirohrstoßdämpfer für Kraftfahrzeuge gemäß dem Oberbegriff des Anspruchs 1, wie aus DE-A-19 724 328 bekannt ist.

In einem solchen Bodenventil wird mit der Ölmenge, die von dem ins Öl eintauchenden Kolben verdrängt wird, die Druckdämpfungskraft erzeugt. Üblicherweise geschieht dies mit mehr oder weniger vorgespannten Ventilen, Scheiben oder Scheibenpaketen in Verbindung mit Bohrungen und/oder ähnlichen Öffnungsquerschnitten.

Der Erfindung liegt die Aufgabe zugrunde, ein Bodenventil auch für höhere Dämpfungskräfte zu schaffen mit der Besonderheit, dass die Dämpfungskennlinie zwischen der Einfederungsgeschwindigkeit 0 m/s und dem Öffnungspunkt OE des Hauptdämpfungsventils eingestellt werden kann.

Diese Aufgabe wird mit einem Bodenventil gelöst, wie es durch den Anspruch 1 gekennzeichnet ist. Weiterbildungen der Erfindung sind in den Unteransprüchen beschrieben.

Das Bodenventil nach der Erfindung besitzt ein Hauptdämpfungsventil für die Hauptkraft und eine Bypass- Steuerbohrung, die das Dämpfungsverhalten vor Öffnen des Hauptdämpfungsventils festlegt. Dieser Bypass- Steuerbohrung ist ein vorgespanntes, als Überdruckventil wirkendes Bypassventil zugeordnet. Durch entsprechendes Positionieren dieses Bypassventils und/oder Auswählen der Vorspannfeder für dieses Bypassventil kann eine gewünschte Dämpfungskennlinie bis zum Öffnen des Hauptdämpfungsventils erreicht werden. Vorteilhaft ist das Bypassventil mit fest eingestellter Vorspannung durch eine von außerhalb des Stoßdämpfers zugängliche Einstellschraube in seiner Einstellhöhe gegenüber der Steuerbohrung einstellbar.

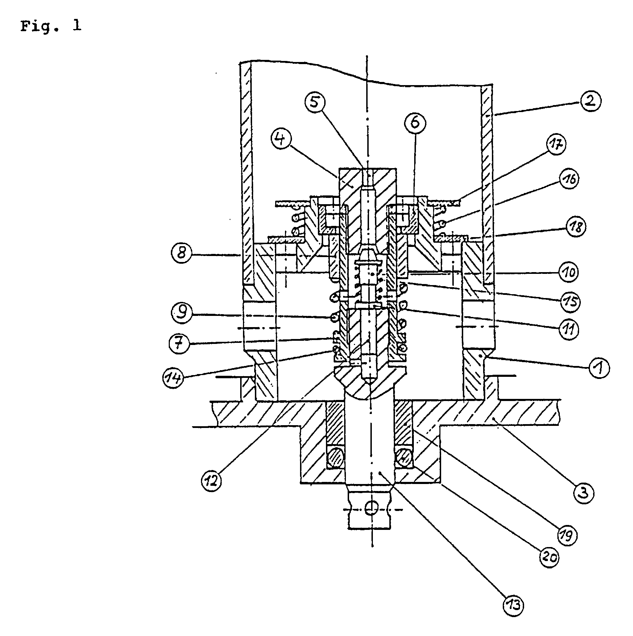

Die Erfindung wird nachfolgend anhand beigefügter Zeichnungen näher beschrieben. Es zeigen
- Figur 1: ein Bodenventil nach der Erfindung im Querschnitt und
- Figur 2: Dämpfungskennlinien mit unterschiedlich eingestelltem Bypassventil.

Das Bodenventilgehäuse 1 ist im unteren Ende des inneren Dämpfungsrohrs 2 aufgenommen. Vom Außenrohr 3 ist nur ein Ausschnitt dargestellt. Im Bodenventilgehäuse 1 sitzt zentrisch das Hauptdämpfungsventil, bestehend aus einem im Gehäuse 1 festsitzenden Ventilteller 6 und einem mit einer Feder 9 vorgespannten Ventilkörper 8, der die Ventilöffnung im Ventilteller 6 verschließt. Der Ventilkörper 8 ist auf einem Träger 7 verschieblich, der auch die Feder 9 bei 14 abstützt. Im Träger 7 sitzt eine Schraube 4 mit einer Bypass-Steuerbohrung 5.

Der Steuerbohrung 5 ist ein Bypassventil 10 zugeordnet, das durch eine Feder 15 vorgespannt ist. Das Bypassventil 10 sitzt mit seinem Schaft in einer Aufnahmebohrung einer von außerhalb des Stoßdämpfers zugänglichen Einstellschraube 13, die in den Träger 7 eingeschraubt ist. Die Einstellschraube 13 ist in üblicher Weise mittels Dichtungsbuchse 19 und O-Ring 20 gegenüber dem Außenrohr 3 abgedichtet.

Die Vorspannfeder 15 des Bypassventils 10 ist einerseits gegen den der Steuerbohrung 5 gegenüberliegenden Ventilkopf und andererseits gegen eine Scheibe 11 abgestützt, die verschieblich auf dem Ventilschaft sitzt und durch die Vorspannfeder 15 gegen eine Schulter am Ventilschaft gehalten ist. Gleichzeitig liegt die Scheibe 11 gegen das stirnseitige Ende der Einstellschraube 13 an. Die Schulter ist durch eine auf den Ventilschaft aufgeschraubte Gleithülse 12 gebildet, über die der Ventilschaft in der Aufnahmebohrung der Einstellschraube 13 gelagert ist.

Mit 18 ist die Ventilscheibe des Rücklaufventils bezeichnet. 16 ist die Vorspannfeder dieser Ventilscheibe, welche Feder sich gegen eine Haltescheibe 17 abstützt, die ihrerseits am Bodenventilgehäuse 1 befestigt ist.

Die Funktion des Bodenventils ist wie folgt:

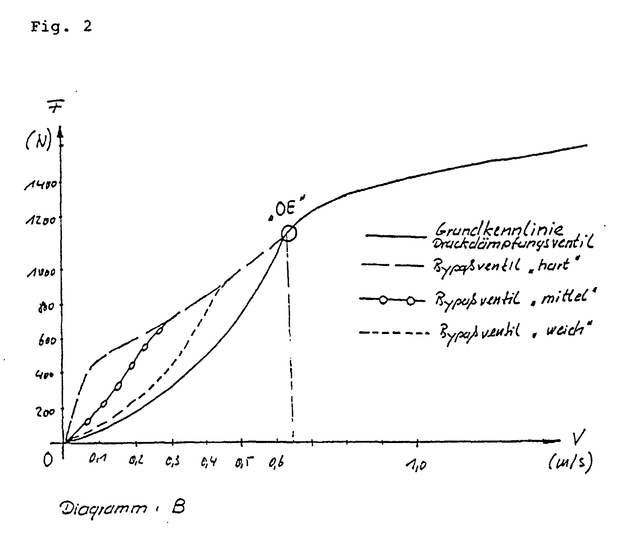

Das Hauptdämpfungsventil 8 ist gegen den Ventilteller 6 mit der Feder 9 vorgespannt. Bei steigender Einfederungsgeschwindigkeit wird durch die Steuerbohrung 5 in der Schraube 4 der Druck erzeugt, der das Hauptdämpfungsventil öffnen läßt. Diese Grunddämpfungskennlinie ist in Figur 2 mit einer ausgezogenen Linie dargestellt, wobei OE den Öffnungspunkt des Hauptdämpfungsventils bezeichnet.

Über die Einstellschraube 13 wird das Bypassventil 10 gegen die Steuerbohrung 5 verändert, wodurch eine durch die Vorspannung der Feder 15 erzeugte Dämpfungskraft verschiedenen Einfederungsgeschwindigkeiten zugeordnet werden kann. Die Kraft kann zwischen der Einfederungsgeschwindigkeit O m/s und dem Öffnungspunkt E des Hauptdämpfungsventils verschoben werden, wie in Figur 2 dargestellt ist. Sowohl das Hauptdämpfungsventil als auch das Bypassventil wirken als eine Art Überdruckventil, was im Kraft- Geschwindigkeits-Diagramm einen degressiven Verlauf ergibt, was Fahrkomfort in Verbindung mit Sicherheit, Kurvenund Bremsstabilität ermöglicht.

Durch Auswahl verschiedener Stärken der Vorspannfeder 15 kann weiter Einfluß auf die Dämpfungskennlinie genommen werden.

## Patentansprüche

1. Bodenventil für Zweirohrstoßdämpfer für Kraftfahrzeuge, mit einem Hauptdämpfungsventil (8) und einer Bypass-Steuerbohrung (5), der ein vorgespanntes, als Überdruckventil wirkendes Bypassventil (10) zugeordnet ist, das in seiner Wirkung von außerhalb des Stoßdämpfers einstellbar ist,
**dadurch gekennzeichnet, dass** das Bypassventil (10) mit fest eingestellter Vorspannung durch eine von außerhalb des Stoßdämpfers zugängliche Einstellschraube (13) in seiner Einstellhöhe gegenüber der Steuerbohrung (5) einstellbar ist.

2. Bodenventil nach Anspruch 1,
**dadurch gekennzeichnet, dass** das Bypassventil (10) mit seinem Schaft in einer Aufnahmebohrung der Einstellschraube (13) verschieblich aufgenommen ist.

3. Bodenventil nach Anspruch 2,
**dadurch gekennzeichnet, dass** die Vorspannfeder (15) des Bypassventils einerseits gegen den der Steuerbohrung (5) gegenüberliegenden Ventilkopf und andererseits gegen eine Scheibe (11) abgestützt ist, die verschieblich auf dem Ventilschaft sitzt und durch die Vorspannfeder (15) gegen eine Schulter am Ventilschaft gehalten ist.

4. Bodenventil nach Anspruch 3,
**dadurch gekennzeichnet, dass** die Schulter an einer auf dem Ventilschaft aufgeschraubten Gleithülse (12) ausgebildet ist, über die der Ventilschaft in der Aufnahmebohrung der Einstellschraube (13) gelagert ist.

## Claims

1. A bottom valve for a motor-vehicle two-tube shock absorber, comprising a main damping valve (8) and a bypass control-borehole (5), a prestressed bypass valve (10) associated to said control-borehole (5) and operating as a pressure relief valve, which bypass-valve (10) is adjustable with respect to its effectiveness from outside the shock absorber, **characterized in that** the bypass valve (10) with fixed pretension can be adjusted at a well defined adjustment height relative to the control-borehole (5) by means of an adjustment bolt (13) accessible from outside the shock absorber.

2. Bottom valve as claimed in claim 1, **characterized in that** the bypass valve (10) is displaceably received by its stem in a receiving borehole of the adjustment bolt (13).

3. Bottom valve as claimed in claim 2, **characterized in that** the bypass-valve prestressing spring (15) rests at one end against the valve head which is opposite the control-borehole (5) and at the other end against a disk (11) displaceably mounted on the valve stem and maintained by the prestressing spring (15) against a shoulder at the valve stem.

4. Bottom valve as claimed in claim 3, **characterized in that** the shoulder is present at a slide bush (12) screwed onto the valve stem, the valve stem being supported by means of said bush in the receiving borehole of the adjustment bolt (13).

## Revendications

1. Clapet de fond destiné à un amortisseur de chocs à deux tuyaux d'un véhicule automobile, comportant un clapet principal d'amortissement (8) et un alésage de commande de déviation (5), auquel alésage est associé un clapet de déviation (10) agissant en tant que clapet de surpression, l'effet dudit clapet de déviation pouvant être réglé de l'extérieur de l'amortisseur, **caractérisé en ce qu'**on peut régler le clapet de déviation dans son hauteur de réglage par rapport à l'alésage de commande (5) avec une précontrainte réglée de façon fixe au moyen d'une vis de réglage (13) accessible de l'extérieur de l'amortisseur.

2. Clapet de fond selon la revendication 1, **caractérisé en ce que** l'on reçoit de façon coulissante le clapet de déviation (10) avec sa tige dans un alésage de réception de la vis de réglage (13).

3. Clapet de fond selon la revendication 2, **caractérisé en ce qu'**on appuie le ressort de précontrainte (15) du clapet de déviation, d'une part, contre la tête de clapet faisant face à l'alésage de commande (5) et, d'autre part, contre un disque (11) qui est logé de façon mobile sur la tige de clapet et qui est maintenu sur la tige de clapet par le ressort de précontrainte (15) contre une épaule sur la tige de clapet.

4. Clapet de fond selon la revendication 3, **caractérisé en ce que** l'épaule est formée par une douille à coulissement (12) vissée sur la tige de clapet ; la tige de clapet étant logée dans l'alésage de réception de la vis de réglage (13) au moyen de ladite douille à coulissement.
